# EUROPEAN PATENT SPECIFICATION

(11) **EP 1 281 543 B1**
(45) Date of publication and mention of the grant of the patent: **18.08.2004**
(21) Application number: 02017031.2
(22) Date of filing: 29.07.2002
(51) Int. Cl.: B60H 1/00

(54) **Process for determining the air flow rate of a heating, ventilation and air conditioning unit of a motor vehicle**
Verfahren zur Bestimmung des Luftdurchsatzes einer Fahrzeug-Klimaanlage
Procédé de détermination de débit d'air dans un dispositif de climatisation de véhicule

(30) Priority: 31.07.2001 IT TO20010763
(43) Date of publication of application: 05.02.2003
(73) Proprietor: C.R.F. Società Consortile per Azioni, 10043 Orbassano (Torino) (IT)
(72) Inventor: Melisurgo, Vito, 10135 Torino (IT); De Marino, Silvio Maurizio, 10093 Collegno (Torino) (IT)
(74) Representative: Quinterno, Giuseppe

(56) References cited:
- EP-A- 0 518 538
- DE-A- 4 414 707
- FR-A- 2 661 759

## Description

The present invention relates to a process for determining the air flow rate of a heating, ventilation and air conditioning unit for the passenger compartment of a motor vehicle.

More specifically the subject of the invention is a process for determining the air flow rate of a unit comprising:
a support casing in which are defined at least one inlet for air to be treated and at least one outlet for emission of the air treated in the unit, and
a fan disposed in the said support casing and driven by an electric motor, to cause a flow of air between the said at least one inlet and the said at least one outlet.

Motor vehicles are ever more frequently provided with a climate control system including a heating, ventilation and air conditioning unit which typically comprises, as well as the said fan, heat exchangers for cooling and/or heating the air, ducts for conveying the air from outside and/or inside the passenger compartment to the fan, gates for modifying the path of the air through the unit and its distribution at the outlet, as well as actuators and electric motors for controlling the movement of the gates. Such units are connected to ducts intended to convey the treated air to the delivery outlets in the passenger compartment, typically formed in an orientable manner and with adjustable apertures.

For the purpose of allowing an optimum control of the climate in the passenger compartment of a motor vehicle provided with such a unit it is important to be able to determine the rate of flow of the air introduced into the passenger compartment through such unit.

In the prior art the air flow rate introduced into the passenger compartment by such a unit is determined with the so-called "body leakage" method: very briefly, with an air pressure sensor in the passenger compartment there is derived the curve which represents the static air pressure as a function of the air flow rate with the aid of a calibrated external blower which blows air into the passenger compartment at a known rate; this air flows through a flanged duct which is coupled to a window of the passenger compartment, the terminal flange of this duct being connected in a sealed manner to the aperture of this window.

In this known method the characteristic curve of the fan of the motor vehicles unit is then subsequently derived, this time without the use of an external blower. From the intersection of the curves thus determined an indication of the rate of flow of air of the unit in the different operating conditions can be derived.

The known method described above has various disadvantages.

In the first place it requires recourse to air pressure sensors which are rather delicate and expensive. The method then involves the determination of the said characteristic curves on each specific model of motor vehicle.

Moreover, the "body leakage" curve obtained is only and solely valid for the specific motor vehicle for which it has been derived, and for the configuration of the motor vehicle adopted in the measurement. It can however happen that, because of the intrinsic variations in production, the closures, the apertures, and the breathers can be different from one example to the other of the same model of motor vehicle. It can moreover happen that during running the user may alter the "leakage" conditions of the passenger compartment, for example simply by opening one or more of the windows of the passenger compartment to a greater or lesser extent.

The measurement formed with the "body leakage" method is effected once and for all and does not take account of the speed of the motor vehicle. It does not, moreover, allow management in an easy manner of all the possible configurations for distribution of the air into the passenger compartment which the user or an automatic climate control system can select in use, nor does it take into account the effects of partial or total obstruction of one or more of the air delivery outlets by the user.

FR-A-2 661 759 and DE-A-44 14 707 disclose as closest prior art a process for determining the air flow characteristic of a motor blower system of a HVAC unit, which uses the rotational speed of the motor as characteristic parameter.

The present invention therefore has the object of providing a process which allows determination of the air flow rate from a heating, ventilation and air conditioning unit in a manner which overcomes the above-described disadvantages of the prior art method.

This and other objects are achieved according to the invention with a process the salient characteristics of which are defined in the annexed Claims 1 and 4.

The method proposed by the invention is based on the specific characterisation of a unit, independently of the motor vehicle on which it will be utilised.

Moreover, this method does not require particularly complex or bulky apparatus, the detection of the flow rate being achievable with use of low cost sensors and being relatively lightly invasive. Moreover, it allows the determination of the flow rate in a manner which is not tied to the configuration of the unit, or the air distribution outlets into the passenger compartment or the motor vehicle in general, and is independent of the speed of the motor vehicle.

Further characteristics and advantages of the invention will become apparent from the following detailed description, given purely by way of non-limitative example, with reference to the attached drawings, in which:
Figure 1 is a schematic representation of a heating, ventilation and air conditioning unit to which the process for the determination of the air flow rate according to the invention is applied;
Figures 2 and 3 are two electrical diagrams which show parts of the devices utilised in the performance of the process according to the invention; and
Figure 4 is a diagram which shows a series of characteristic curves which express the air flow rate of a unit as determined with the process according to the invention.

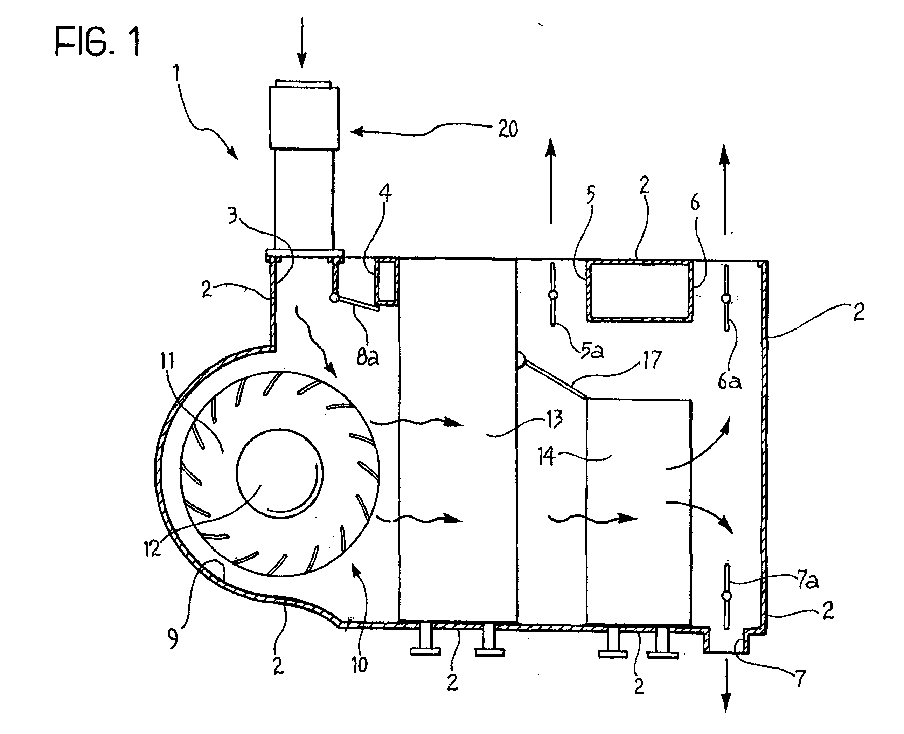

In Figure 1 the reference numeral 1 generally indicates a heating, ventilation and air conditioning unit for a motor vehicle.

This unit comprises a support structure 2 in which are defined first and second inlets 3, 4 for air arriving in operation from outside and from within the passenger compartment of the motor vehicle respectively.

The support structure or casing 2 of the unit 1 further has a plurality of outlets, such as those indicated 5, 6, and 7 for emitting air treated in the unit into the passenger compartment.

In the exemplary and schematic embodiment illustrated the aperture 5 is intended to direct a stream of air towards the inner surface of the windscreen of the motor vehicle, the aperture 6 is intended to be connected to a plurality of ventilation outlets at the mid height of the passenger compartment, whilst the aperture 7 is intended to direct a stream of treated air to the lower region of the passenger compartment.

Associated with the outlet apertures 5, 6 and 7 are respective gates, indicated 5a, 6a and 7a which allow the flow of air through the associated apertures to be controlled.

A further gate 8a makes it possible selectively to couple the inlet 3 for external air or the inlet 4 for internal air with a defined region 9 within the support casing 2, in which is disposed an electric fan 10 which comprises a bladed rotor 11 and an electric drive motor 12.

The electric fan 12, when operated, is able to cause air to flow through the unit 1 form the inlet 3 or the inlet 4 to one or more of the outlets 5-7.

Downstream of the electric fan 10 are disposed, within the structure or casing 2, first and second heat exchangers indicated 13 and 14.

The heat exchanger 13 is conveniently the evaporator of a refrigerating plant of type known per se.

The heat exchanger 14 is conveniently of the liquid/air type, and is connected in the coolant liquid circuit of the internal combustion engine of the motor vehicle.

The reference numeral 17 indicates in Figure 1 a further gate the position of which makes it possible to control the coupling of the outlets 5-7 with the evaporator 13 and the heater 14.

According to the invention, for the determination of its air flow characteristics a unit 1 of the type described above is disposed in a measurement station and subjected to a series of operations which will now be described.

The gate 8a is caused to move to the position illustrated in Figure 1, in which it completely intercepts the inlet 4 for air coming from the interior of the passenger compartment (recirculation inlet).

To the other inlet 3 of the unit 1 is coupled a calibrated flow rate measuring instrument, such as that indicated 20 in Figure 1.

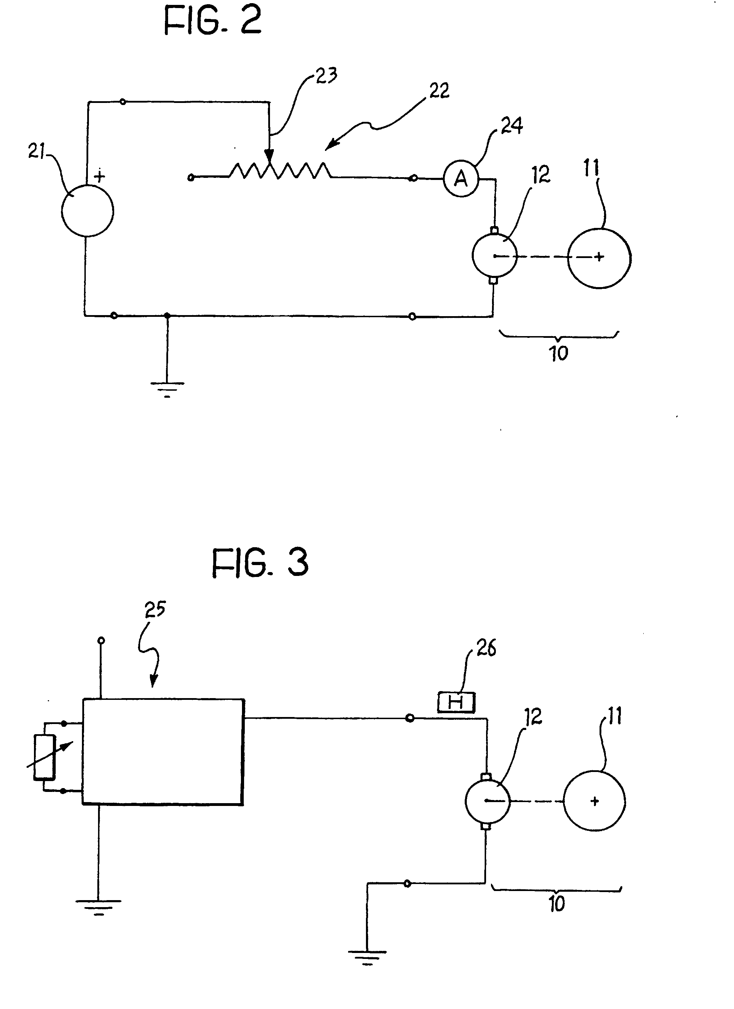

Then the motor 12 of the fan 10 is supplied with a voltage having a first known value. If this motor is a DC motor intended in normal operation to be supplied with a DC voltage the value of which is adjustable by means of a rheostat, the motor 12 of the fan is connected in the measurement station to a DC supply source in the manner illustrated in Figure 2.

In this figure the reference numeral 21 indicates a DC voltage generator which is coupled to the motor 12 of the electric fan via a rheostat 22 provided with a movable cursor 23.

The motor 12 of the electric fan is initially supplied with a DC voltage of predetermined value lying in the range of normal variation of the voltage applied to this motor in normal operation on board a motor vehicle. Thus, by way of example, the motor 12 initially has applied to it a voltage which by means of the rheostat 22 is regulated at 6 volts.

Then, for example by means of an ammeter indicated 24 in Figure 2, the corresponding current consumed by the motor 12 of the electric fan is then measured, and by means of the instrument 20 the air flow rate which flows through the unit 1 is detected in a plurality of working conditions in which the outlet apertures 5-7 of the unit are for example initially all completely open, then at least one of them is partially closed, then at least one of them is totally closed, etc.

In each of these working conditions the value of the voltage applied to the motor 12 of the fan is detected at the measurement station and memorised, as is the value of the corresponding current consumed by it, as well as the value of the air flow rate indicated by the flow rate measurement instrument 20.

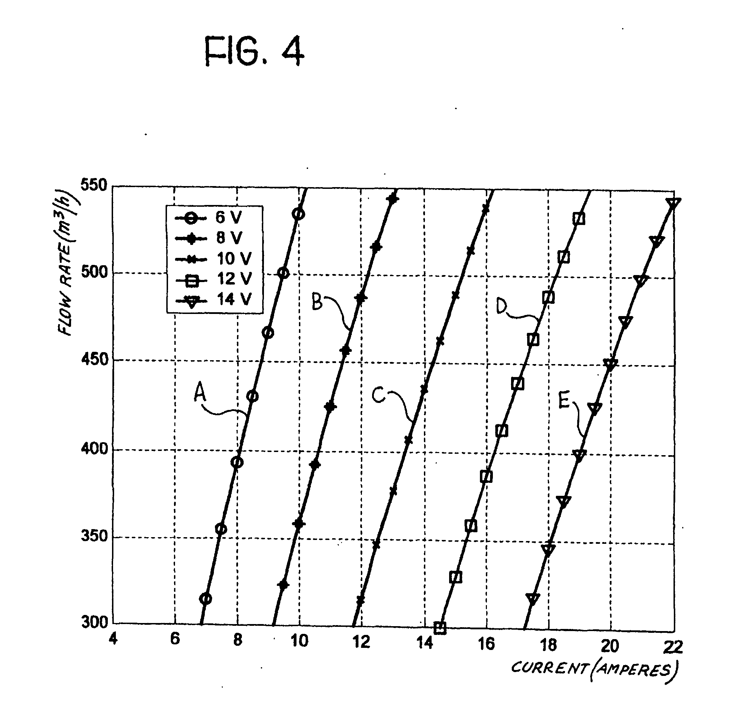

The sets of three values (flow rate, current, voltage) thus obtained can be each represented with a point in a Cartesian diagram such as that shown in Figure 4. In this figure the values of air flow rate are plotted along the ordinate, for example in m³/h whilst the measured value of the current in the motor 12 of the electric fan is plotted along the abscissa, for example in amps.

The sets of three values obtained as described above correspond for example to the points of the curve which in Figure 4 are indicated A, which refer to a particular supply voltage value applied to the motor 12 of the electric fan, for example equal to 6 volts.

Conveniently, the previously described operations are then repeated at the measurement station whilst a different voltage supply value, for example equal to 8 volts is applied to the motor 12 of the electric fan. New sets of three values (flow rate, current, voltage) are thus obtained which, in the diagram of Figure 4, correspond to the points shown in the curve indicated there with the letter B.

In a similar manner it is then possible subsequently to obtain the points of the curves which in Figure 4 are indicated C, D and E, which correspond to the values measured whilst a voltage the value of which is equal to 10 volts, 12 volts and, 14 volts respectively is applied to the motor of the electric fan.

The curves A-E of Figure 4 represent the flow rate characteristics of the heating, ventilation and air conditioning unit 1 subjected to testing.

These curves can be obtained by means of interpolation methods known per se, on the basis of the co-ordinates of the points corresponding to the measured values.

If, on the other hand, the electric motor 12 of the fan of the unit is intended to be supplied in normal operation with a pulsed voltage of fixed frequency and modulated duration (pulse width modulation, PWM), and therefore its speed of rotation in operation is adjustable by varying the duty-cycle of the said voltage, the duty-cycle of this voltage is for example detected at the measurement station as the value indicative of the average voltage supplied to the motor. In this case the current flowing in the motor is also modulated, and its average value must be obtained at the measurement station.

To this end, as is schematically illustrated in Figure 3, the electric motor 12 of the electric fan 10 is coupled in the measurement station to a voltage pulse generator 25 of fixed frequency and variable duty-cycle. The corresponding current flowing in the motor 12 is detected for example by means of a Hall effect sensor 26 which per se provides an indication of the average current.

In the measurement station, by applying to the motor 12 of the electric fan voltages having different pre-determined duty-cycle values, average values of the current flowing in the motor and, with the instrument 20, the corresponding values of the air flow rate through the unit 1 are measured in different conditions of operation in which the outlets from this group are progressively occluded.

With the sets of three values (duty-cycle of the voltage, average current and air flow rate) it is possible to construct a diagram similar to that of Figure 4 in which the various curves correspond to the various duty-cycle values of the voltage supplied to the motor of the electric fan.

In the case of electric fans supplied with a variable duty-cycle voltage it is possible to repeat the measurements at the measurement station with different values of amplitude of the supply voltage for the purpose of simulating what occurs on board a motor vehicle by the effect of a variation in the supply voltage (battery voltage). There is then obtained, for each amplitude value of the supply voltage, a corresponding diagram of the type shown in Figure 4, or rather a corresponding set of characteristic points which, appropriately memorised, then allow determination of the air flow rate of the heating, ventilation and air conditioning unit in normal operation even upon variation of the supply voltage available on board the motor vehicle.

Once the flow rate characteristics of a specific type of heating, ventilation and air conditioning unit has been detected the information indicative of its flow rate characteristics, whether these are memorised in the form of data or graphically, make it possible subsequently to determine the instantaneous air flow rate of such a unit on board a motor vehicle during normal operation of the climate control system within the passenger compartment of this motor vehicle.

For this purpose the climate control system is provided with memory devices in which are stored indicative values of the (average) voltage, (average) current and air flow rate previously obtained by performing the above-described procedure at a measurement station. The climate control system is then arranged to acquire the instantaneous values of the (average) voltage applied to the fan motor of the unit on board the motor vehicle, and the average current flowing through this motor. On the basis of the comparison of these instantaneous measured values with those stored in the said memory device, the climate control system is able to determine the instantaneous value of the air flow rate of the heating, ventilation and air conditioning unit.

This information can conveniently be utilised for a better management of the operation of the unit 1 for the purpose of achieving an improved climate control.

## Claims

1. A process for determining the air flow rate characteristic of a heating, ventilation and air conditioning unit (1) for a motor vehicle, this unit comprising:
a support casing (2) in which are defined at least one inlet (3,4) for air to be treated and at least one outlet (5-7) for the emission of air treated in the unit (1), and
a fan (10) driven by an electric motor (12) disposed in the said casing (2) for causing air to flow from the said at least one inlet (3,4) to the said at least one outlet (5-7);
the process being **characterised by** the fact that:
a) a calibrated flow rate measurement instrument (20) is coupled to the said at least one inlet or outlet;
b) the motor (12) of the fan (10) is supplied with a voltage having a known average value;
c₁) the current consumed by the motor (12) of the fan (10) is measured and the air flow rate measured by the said instrument (20) is detected in a plurality of conditions in each of which at least one outlet of the unit (1) is closed to a different extent;
c₂) for each of the said conditions a value indicative of the average voltage supplied to the motor (12) of the fan (10), the average value of the current consumed by it, as well as the value of the corresponding air flow rate detected by the said instrument (20) is memorised;
d) possible repetition of phases c₁) and c₂) by supplying the motor (12) of the fan (10) with an average voltage having a different value.

2. A process according to Claim 1, for a unit (1) in which the fan (10) is driven by an electric motor (12) the speed of rotation of which is controllable by means of a rheostat disposed between the motor (12) and a DC voltage supply source, the said value indicative of the average voltage supplied to the motor (12) being the value of the DC voltage applied to the motor (12) of the fan via the rheostat.

3. A process according to Claim 1, for a unit (1) in which the fan (10) is driven by an electric motor (12) supplied with a pulsed voltage of fixed frequency and modulated duration, for which the speed of rotation is adjustable by varying the duty-cycle of the said voltage, the said value indicative of the average voltage supplied to this motor (12) being indicative of the duty-cycle of the said voltage.

4. A process for determination of the instantaneous flow rate of a heating, ventilation and air conditioning unit (1) on board a motor vehicle during normal operation of this unit (1), the process being **characterised in that** it comprises the operations of:
- storing values of average voltage, average current and air flow rate obtained by performing the process according to one or more of the preceding claims on a unit (1) of the same type in memory means;
- measuring the instantaneous values of the average voltage applied to the motor (12) of the fan (10) of the unit (1) on board the motor vehicle, and the average current flowing through this motor (12); and
- determining the instantaneous value of the air flow rate of the unit (1) on board the motor vehicle on the basis of the comparison of the said measured instantaneous voltage and current values with those stored in the said memory means.

## Patentansprüche

1. Verfahren zur Bestimmung des Luftdurchsatzes, der für eine Heiz-, Belüftungs- und Klimatisierungseinheit (1) für ein Kraftfahrzeug kennzeichnend ist, wobei diese Einheit Folgendes umfasst:
ein Haltegehäuse (2), in dem zumindest ein Einlass (3, 4) für zu behandelnde Luft und zumindest ein Auslass (5-7) für die Emission der in der Einheit (1) behandelten Luft definiert sind, und
ein von einem Elektromotor (12) angetriebenes Gebläse (10), das im Gehäuse (2) angeordnet ist, um Luft von dem zumindest einen Einlass (3, 4) zu dem zumindest einen Auslass (5-7) strömen zu lassen;
wobei das Verfahren durch die Tatsache **gekennzeichnet** ist, dass:
a) ein kalibriertes Durchsatzmessinstrument (20) an dem zumindest einen Einlass oder Auslass angeschlossen ist;
b) der Motor (12) des Gebläses (10) mit einer Spannung versorgt wird, welche einen bekannten Mittelwert aufweist;
c₁) der vom Motor (12) des Gebläses (10) verbrauchte Strom gemessen wird und der vom Instrument (20) gemessene Luftdurchsatz in einer Mehrzahl von Zuständen detektiert wird, wobei in jedem davon zumindest ein Auslass der Einheit (1) in unter-schiedlichem Ausmaß geschlossen ist;
c₂) für jeden dieser Zustände ein Wert gespeichert wird, der die durchschnittliche Spannung angibt, welche dem Motor (12) des Gebläses (10) zugeführt wird, sowie der Mittelwert des von diesem verbrauchten Stroms und der Wert des vom Instrument (20) detektierten, entsprechenden Luftdurchsatzes;
d) eine mögliche Wiederholung der Phasen c₁) und c₂) stattfindet, indem der Motor (12) des Gebläses (10) mit einer durchschnittlichen Spannung versorgt wird, welche einen anderen Wert aufweist.

2. Verfahren gemäß Anspruch 1, für eine Einheit (1), bei der das Gebläse (10) von einem Elektromotor (12) angetrieben wird, dessen Umdrehungsgeschwindigkeit mittels eines zwischen dem Motor (12) und einer Gleichstromspannungsversorgungsquelle angeordneten Regelwiderstands steuerbar ist, wobei der Wert, der die dem Motor (12) zugeführte, durchschnittliche Spannung angibt, der Wert der Gleichstromspannung ist, die über den Regelwiderstand am Motor (12) des Gebläses angelegt wird.

3. Verfahren gemäß Anspruch 1, für eine Einheit (1), bei der das Gebläse (10) von einem Elektromotor (12) angetrieben wird, der mit einer Impulsspannung von fester Frequenz und modulierter Dauer versorgt wird und bei dem die Umdrehungsgeschwindigkeit durch Variation des Arbeitszyklus der Spannung einstellbar ist, wobei der Wert, der die dem Motor (12) zugeführte, durchschnittliche Spannung angibt, auf den Arbeitszyklus dieser Spannung hinweist.

4. Verfahren zur Bestimmung des momentanen Durchsatzes einer Heiz-, Belüftungs- und Klimatisierungseinheit (1) an Bord eines Kraftfahrzeugs während des normalen Betriebs dieser Einheit (1), wobei das Verfahren **dadurch gekennzeichnet ist, dass** es folgende Arbeitsgänge umfasst:
- das Speichern von Werten der durchschnittlichen Spannung, des durchschnittlichen Stroms und des Luftdurchsatzes, die erhalten wurden, indem das Verfahren gemäß einem oder mehreren der vorhergehenden Ansprüche an einer Einheit (1) desselben Typs in Speichermitteln durchgeführt wird;
- das Messen der momentanen Werte der durchschnittlichen Spannung, die am Motor (12) des Gebläses (10) der Einheit (1) an Bord des Kraftfahrzeugs angelegt wird, und des durch diesen Motor (12) fließenden durchschnittlichen Stroms; und
- das Bestimmen des momentanen Werts des Luftdurchsatzes der Einheit (1) an Bord des Kraftfahrzeugs auf Basis eines Vergleichs der Werte der momentanen Spannung und des Stroms, die gemessen werden, mit jenen, die in den Speichermitteln gespeichert sind.

## Revendications

1. Procédé de détermination du débit d'air caractéristique d'une unité de chauffage, de ventilation et de conditionnement d'air (1) pour un véhicule à moteur, cette unité comprenant :
une enceinte de support (2) dans laquelle sont définies au moins une entrée (3, 4) pour l'air à traiter et au moins une sortie (5-7) pour l'émission de l'air traité dans l'unité (1), et
un ventilateur (10) entraîné par un moteur électrique (12) disposé dans ladite enceinte (2) pour faire circuler l'air à partir de ladite au moins une entrée (3, 4) jusqu'à ladite au moins une sortie (5-7) ;
le procédé étant **caractérisé par le fait que** :
a) un instrument de mesure de débit calibré (20) est couplé à ladite au moins une entrée ou à ladite au moins une sortie ;
b) le moteur (12) du ventilateur (10) est alimenté avec une tension présentant une valeur moyenne connue ;
c₁) le courant consommé par le moteur (12) du ventilateur (10) est mesuré et le débit d'air mesuré par ledit instrument (20) est détecté dans une pluralité de conditions dans chacune desquelles au moins une sortie de l'unité (1) est fermée à un degré différent ;
c₂) pour chacune desdites conditions, une valeur indicative de la tension moyenne fournie au moteur (12) du ventilateur (10), de la valeur moyenne du courant consommé par celui-ci, ainsi que de la valeur du débit d'air correspondant détecté par ledit instrument (20) est mémorisée ;
d) une répétition possible des phases c₁) et c₂) en alimentant le moteur (12), du ventilateur (10) avec une tension moyenne présentant une valeur différente.

2. Procédé selon la revendication 1, pour une unité (1) dans laquelle le ventilateur (10) est entraîné par un moteur électrique (12) dont la vitesse de rotation peut être commandée au moyen d'un rhéostat disposé entre le moteur (12) et une source d'alimentation de tension continue, ladite valeur indicative de la tension moyenne fournie au moteur (12) étant la valeur de la tension continue appliquée au moteur (12) du ventilateur par l'intermédiaire du rhéostat.

3. Procédé selon la revendication 1, pour une unité (1) dans laquelle le ventilateur (10) est entraîné par un moteur électrique (12) alimenté avec une tension pulsée présentant une fréquence fixe et une durée modulée, dont la vitesse de rotation peut être réglée en faisant varier le cycle opératoire de ladite tension, ladite valeur indicative de la tension moyenne fournie à ce moteur (12) étant indicative du cycle opératoire de ladite tension.

4. Procédé de détermination du débit instantané d'une unité de chauffage, de ventilation et de conditionnement d'air (1) embarquée dans un véhicule à moteur durant le fonctionnement normal de cette unité (1), le procédé étant **caractérisé en ce qu'**il comprend les opérations consistant à :
- stocker des valeurs de tension moyenne, de courant moyen et de débit d'air obtenues en exécutant le procédé selon une ou plusieurs des revendications précédentes sur une unité (1) du même type dans un moyen de mémoire ;
- mesurer les valeurs instantanées de la tension moyenne appliquée au moteur (12) du ventilateur (10) de l'unité (1) embarquée dans le véhicule à moteur, et du courant moyen qui circule à travers ce moteur (12) ; et
- déterminer la valeur instantanée du débit d'air de l'unité (1) embarquée dans le véhicule à moteur sur la base de la comparaison desdites valeurs instantanées mesurées de la tension et du courant avec celles stockées dans ledit moyen de mémoire.
